# EUROPEAN PATENT APPLICATION

(11) **EP 4 376 494 A1**
(43) Date of publication of application: **29.05.2024**
(21) Application number: 22909671.4
(22) Date of filing: 28.11.2022
(51) Int. Cl.: H04W 48/18

(54) **INFORMATION CONFIGURATION METHOD AND APPARATUS, AND RELATED DEVICES AND STORAGE MEDIUM**

(30) Priority: 24.12.2021 CN 202111598299
(71) Applicant: China Mobile (Chengdu) Information & Telecommunication Technology Co., Ltd., Chengdu, Sichuan 610041 (CN); CHINA MOBILE COMMUNICATIONS GROUP CO., LTD., Beijing 100032 (CN)
(72) Inventor: ZHU, Lei, Chengdu, Sichuan 610041 (CN); TANG, Xiaoyong, Chengdu, Sichuan 610041 (CN); ZHAO, Lijun, Chengdu, Sichuan 610041 (CN); CHONG, Jing, Chengdu, Sichuan 610041 (CN); LI, Ying, Chengdu, Sichuan 610041 (CN); YOU, Zhengpeng, Chengdu, Sichuan 610041 (CN); WEN, Tingting, Chengdu, Sichuan 610041 (CN)
(74) Representative: J A Kemp LLP
(86) International application number: PCT/CN2022/134819
(87) International publication number: WO 2023/116356

(57) **Abstract**

Disclosed in the present application are an information configuration method and apparatus, and a network device, a first device and a storage medium. The method comprises: a network device sending first information to a first device, wherein the first information at least indicates an association relationship between a first network and a network slice, and the first network is used for connecting a terminal and the first device.

## Description

### CROSS-REFERENCE TO RELATED APPLICATION

This application is filed based on and claims priority to Chinese Patent application No. 202111598299.1, filed on December 24, 2021, the content of which is hereby incorporated by reference in its entirety.

### TECHNICAL FIELD

The disclosure relates to the field of communications, and in particular to methods and apparatuses for configuring information, related devices, and a storage medium.

### BACKGROUND

As an era of the fifth generation (5G) mobile communication technology is an era of Internet of Everything, the access of a large number of different types of devices will generates diverse service requirements, for example, a service requiring a large bandwidth and a high speed, a service requiring a low latency but not a high speed, etc. A service implementation framework for terminals that can directly access a 5G network may provide a high-quality service for these services with widely varying requirements simultaneously through a 5G network slice technology.

In the related art, however, for terminals that do not support the 5G network, that is, in a scenario in which the terminals cannot directly access the 5G network, there is not yet an effective solution for how to differentially ensure quality of a network transmission.

### SUMMARY

To solve the technical problem in the related art, embodiments of the disclosure provide methods and apparatuses for configuring information, related devices, and a storage medium.

The technical solutions of the disclosure are implemented as follows.

An embodiment of the disclosure provides a method for configuring information, which is applied to a network device and includes the following operation.

First information is sent to a first device. The first information at least indicates an association between a first network and a network slice.

The first network is configured to connect at least one terminal and the first device.

In the above solution, the first information at least includes second information and third information.

The second information characterizes an attribution of the first network.

The third information characterizes the network slice corresponding to the first network.

In the above solution, the second information includes at least one of: an identifier of an access network type of the first network; an identifier of an access point in the first network; information about a manufacturer of the at least one terminal accessing the first network; information about a device type of the at least one terminal accessing the first network; or information about an application carried by the first network.

In the above solution, the method further includes the following operations.

Fourth information reported by the first device is received. The fourth information characterizes information about the first network.

The first information is sent to the first device based on the fourth information.

In the above solution, when the first information indicates at least two associations between attributions of the first network and network slices, the first information further indicates usage priorities of the at least two associations.

In the above solution, the first information explicitly or implicitly indicates the usage priorities of the at least two associations.

In the above solution, when the first network is associated with at least two network slices, the first information further indicates priorities of the at least two network slices.

In the above solution, the first information explicitly or implicitly indicates the priorities of the at least two network slices.

An embodiment of the disclosure provides a method for configuring information, which is applied to a first device and includes the following operation.

First information is received from a network side. The first information at least indicates an association between a first network and a network slice.

The first network is configured to connect at least one terminal and the first device.

In the above solution, the method further includes the following operation.

Data of the first network are carried onto the network slice corresponding to the first network using the first information.

In the above solution, the first information at least includes second information and third information.

The second information characterizes an attribution of the first network.

The third information characterizes the network slice corresponding to the first network.

In the above solution, the second information includes at least one of: an identifier of an access network type of the first network; an identifier of an access point in the first network; information about a manufacturer of the at least one terminal accessing the first network; information about a device type of the at least one terminal accessing the first network; or information about an application carried by the first network.

In the above solution, the method further includes the following operation.

Fourth information is reported to the network side. The fourth information characterizes information about at least one first network.

In the above solution, when first information indicates at least two associations between attributions of the first network and network slices, the first information further indicates usage priorities of the at least two associations.

A network slice is selected for carrying data of the first network based on the usage priorities of the at least two associations.

In the above solution, the first information explicitly or implicitly indicates the usage priorities of the at least two associations.

In the above solution, when the first network is associated with at least two network slices, the first information further indicates priorities of the at least two network slices.

A network slice is selected for carrying data of the first network based on the priorities of the at least two network slices.

In the above solution, the first information explicitly or implicitly indicates the priorities of the at least two network slices.

An embodiment of the disclosure provides an apparatus for configuring information, which includes a sending unit.

The sending unit is configured to send first information to a first device. The first information at least indicates an association between a first network and a network slice.

The first network is configured to connect at least one terminal and the first device.

An embodiment of the disclosure provides an apparatus for configuring information, which includes a first receiving unit.

The first receiving unit is configured to receive first information from a network side. The first information at least indicates an association between a first network and a network slice.

The first network is configured to connect at least one terminal and a first device.

An embodiment of the disclosure provides a network device, which includes a first communication interface and a first processor.

The first communication interface is configured to send first information to a first device, and the first information at least indicates an association between a first network and a network slice.

The first network is configured to connect at least one terminal and the first device.

An embodiment of the disclosure provides a first device, which includes a second communication interface and a second processor.

The second communication interface is configured to receive first information from a network side, and the first information at least indicates an association between a first network and a network slice.

The first network is configured to connect at least one terminal and the first device.

An embodiment of the disclosure provides a network device, which includes a first processor and a first memory configured to store a computer program capable of running on a processor.

The first processor is configured to perform operations of any method at the network device side mentioned above when running the computer program.

An embodiment of the disclosure provides a first device, which includes a second processor and a second memory configured to store a computer program capable of running on a processor.

The second processor is configured to perform operations of any method at the first device side mentioned above when running the computer program.

An embodiment of the disclosure provides a storage medium having stored thereon a computer program that, when executed by a processor, causes the processor to perform operations of any method at the network device side mentioned above, or to perform operations of any method at the first device side mentioned above.

The embodiments of the disclosure provide methods and apparatuses for configuring information, related devices, and a storage medium. The network device sends the first information to the first device, the first information at least indicates the association between the first network and the network slice, and the first network is configured to connect at least one terminal and the first device. With the solutions in the embodiments of the disclosure, in a scenario where the terminal only supports a non-5G network (i.e. the first network), the terminal needs to access the first device through the non-5G network, and then to access to the 5G network through the first device: the network side configures the association between the non-5G network and the network slice for the first device, that is, provides an enhanced data scheduling rule for the first device, so that the first device may fully utilize the 5G network slice technology to relay services to access the 5G network for the terminal that does not support the 5G network, thereby enabling the first device to differentially ensure a network resource and transmission quality, and improving user experience.

### BRIEF DESCRIPTION OF THE DRAWINGS

FIG. 1 is a schematic diagram illustrating a reception and configuration of User Equipment (UE) Route Selection Policy (URSP) in the related art.
FIG. 2 is a schematic diagram illustrating forwarding of multiple types of network signals by a 5G Customer Premise Equipment (CPE) in the related art.
FIG. 3 is a flowchart illustrating a method for configuring information according to an embodiment of the disclosure.
FIG. 4 is a schematic diagram illustrating associations between information of a second-hop network (which may be understood as a network between a 5G CPE and a terminal) of the 5G CPE and network slices according to an application embodiment of the disclosure.
FIG. 5 is a flowchart illustrating a communication process between a 5G CPE and a network side according to an application embodiment of the disclosure.
FIG. 6 is a structural diagram of an apparatus for configuring information according to an embodiment of the disclosure.
FIG. 7 is a structural diagram of an apparatus for configuring information according to another embodiment of the disclosure.
FIG. 8 is a structural diagram of a network device according to an embodiment of the disclosure.
FIG. 9 is a structural diagram of a first device according to an embodiment of the disclosure.
FIG. 10 is a structural diagram of a system for configuring information according to an embodiment of the disclosure.

### DETAILED DESCRIPTION

The disclosure will be further described in detail below in combination with the drawing and the embodiments.

In the related art, a network slice may provide a complete end-to-end virtual network for a given user, which may not only provide differentiated quality of service based on different scenario services, but also provide differentiated and comprehensive user experiences for different users for a same service. Furthermore, the network slice may further provide differentiated and comprehensive service experiences for different applications with a same service type.

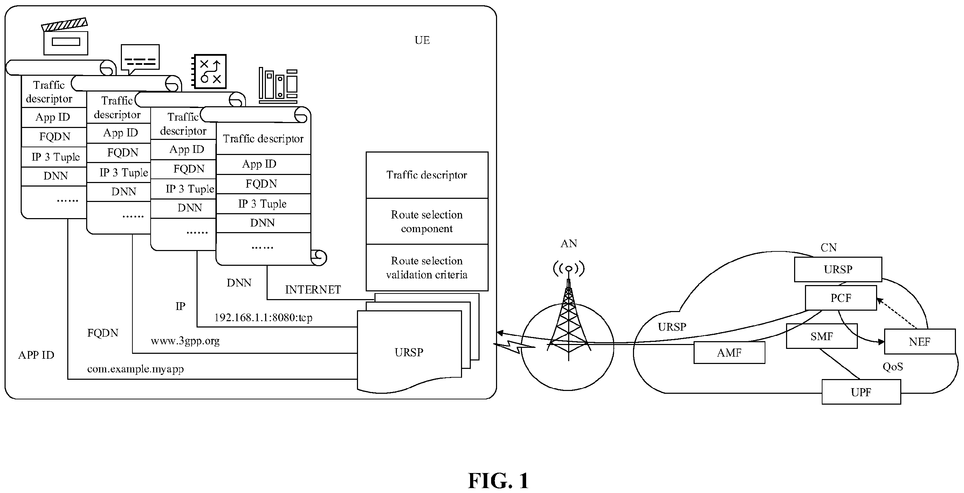

URSP is a core rule for configuring and managing the network slice for a terminal. The URSP is generated during a slice subscription and activation process, and acts on the terminal in a slice service flow to instruct the terminal to carry service data on a corresponding network slice based on a Traffic Description (TD). A mobile application provider needs to sign a Service Level Agreement (SLA) with a 5G network operator based on a requirement of a mobile Internet application for a 5G network service. The 5G network operator will provide a network slice service conforming to the SLA for the mobile Internet application, and create the URSP, which will be sent to the terminal for configuration via a core network and a base station. The terminal receives and configures the URSP as illustrated in FIG. 1.

URSP rules may include a priority, a traffic description, a route selection component (including a network slice identifier (ID)) and a route selection validation criterion. The traffic description may include one or a combination of the following parameters.

Application description, which is used to identify an application corresponding to a service flow, and may specifically include an operating system identifier (OSId) and an application identifier (AppId).

Internet Protocol (IP) description, which is used to identify IP features of the service flow, that is, a triple of a destination IP: an IP address/an IPv6 prefix, a port number and a protocol number.

Domain description, which is used to identify features of a domain of the service flow, that is, the domain to be accessed, and may include a domain name or a regular expression for a domain name matching rule.

Non-IP description, that is, a description of non-IP type traffic features.

Information of a private Data Network Name (DNN), which is used to identify the DNN accessed by an application.

Connection capability, which is used to identify a specific connection capability. For example, ims, mms and internet may denote the type of service as an IP Multimedia Subsystem (IMS) voice call, a Multimedia Messaging Service (MMS) and an internet, respectively.

The terminal stores and applies the URSP rules. When an application of the terminal associated with a specific network slice requests data transmission, i.e., when a traffic feature associated with a specific network slice is matched in the terminal, if the terminal has established one or more Protocol Data Unit (PDU) sessions corresponding to the specific network slice, the terminal selects one of the PDU sessions to forward user data of the application; and if the terminal has not established a PDU session corresponding to the specific network slice, the terminal requests to establish the PDU session corresponding to this network slice.

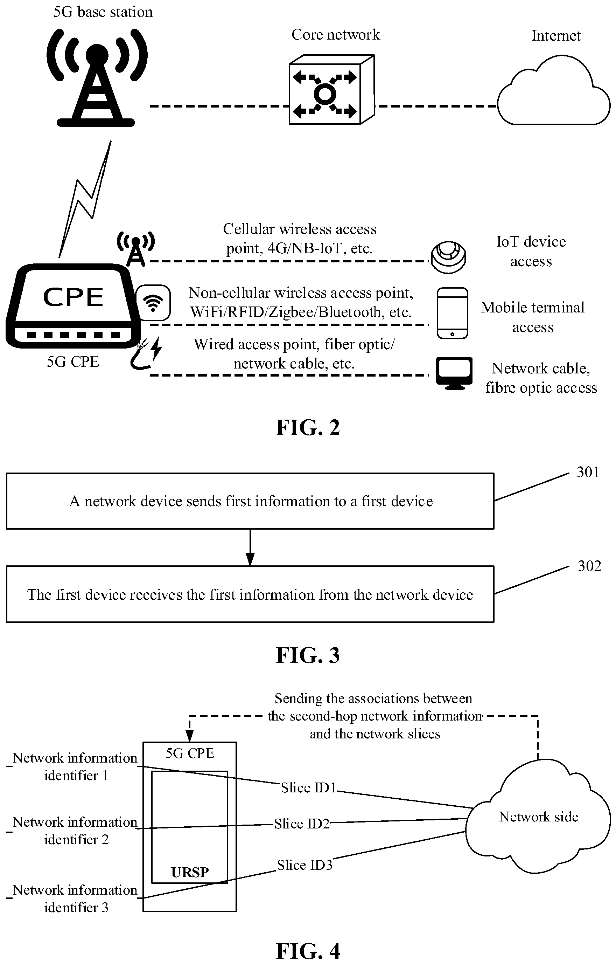

In the related art, a non-5G device (i.e., a terminal that does not support the 5G network) may access the 5G network through a 5G CPE. As illustrated in FIG. 2, in various industrial application scenarios, the 5G CPE is used as a gateway for converting 5G signals to other signal formats (e.g., a 4th Generation (4G) mobile communication technology, a Narrowband Internet of Things (NB-IoT), a Wireless Fidelity (WiFi), a Zigbee, a Bluetooth, a Radio Frequency Identification (RFID) network, a Long Range Wide Area Network (LoRaWAN) and other wireless networks, as well as an optical fiber, a network cable, a High Definition Multimedia Interface (HDMI) and other wired networks), so that industrial devices that do not support a 5G access may access the 5G network, and may access an industrial specific network established based on the 5G network slice technology. However, in a practical service matching process, the networks accessing the 5G CPE present diversity and complexity (i.e., the networks accessing the 5G CPE may include the 4G, the NB-IoT, the WiFi, the Zigbee, the Bluetooth, the RFID network, the LoRaWAN and other wireless networks, as well as the optical fiber, the network cable, the HDMI and other wired networks), as well as differentiated requirements for ensuring an end-to-end Quality of Service (QoS).

Specifically, there are three typical industrial application scenarios for the 5G CPE as follows.

Service Scenario 1: a service accessing the 5G CPE through the WiFi is usually a service with low requirements on a network quality (e.g., a throughput, an end-to-end delay, an SLA guarantee, etc.), such as an Office Automation (OA) application and a public application.

Service Scenario 2: a service accessing the 5G CPE through the wired network such as the optical fiber, is usually a service with high requirements on the network quality, such as a medical imaging device, a medical ultrasound device and other medical detection or monitoring devices in a medical industrial application scenario.

Service Scenario 3: a service accessing the 5G CPE through the network such the Bluetooth or the LoRaWAN, is usually a service with high delay requirements but low throughput requirements, such as a positioning service, an equipment control service, or the like. This type of service requires updating location information or receiving instructions in real time, to ensure the accuracy and rapidity of service execution.

In order to enable the 5G CPE to effectively support the above three industrial application scenarios (i.e., service scenario 1, service scenario 2 and service scenario 3), it is necessary for the 5G network to identify different types of services or types of access networks accessing the 5G CPE, as well as requirements of the services or networks accessing the 5G CPE for an end-to-end transmission quality (e.g., a transmission throughput, a transmission delay, a transmission SLA, etc.), so as to ensure differentiated requirements of the services of the terminal accessing the 5G CPE or a network performance during uplink data transmission.

In a practical application, in order to meet the above requirements, the 5G CPE may associate different services with different network slices based on the URSP rules. However, the URSP rules in the related art are not fully applicable to the 5G CPE, and a specific analysis of applicability of the URSP rules in the 5G CPE scenarios is illustrated in Table 1.

**Table 1**

| Parameters of URSP Traffic Descriptor | Applicability to the 5G CPE | Description |
|---|---|---|
| Application description | No | A service application is installed in a terminal accessing the second-hop network of the 5G CPE, rather than in the 5G CPE. The 5G CPE cannot directly acquire an application identifier (AppId) and other information of the application, so a rule based on the application description is not applicable to the 5G CPE. |
| IP description | Applicable to some scenarios | Only applicable to scenarios in which a destination IP accessed by an application is relatively fixed |
| Domain description | Applicable to some scenarios | Only applicable to scenarios in which a domain name accessed by an application is relatively fixed |
| Non-IP description | No | This type of parameter is applicable to a scenario of a PDU session with an Ethernet type. However, the 5G CPE forwards three-layer IP packets between the second-hop network and the 5G network, so a rule based on the non-IP description is not applicable to the 5G CPE. |
| DNN | Applicable to some scenarios | Only applicable to the 5G CPE supporting multi-card and multi-standby, and each card may only access one DNN and associate with one network slice |
| Connection capability | No | The 5G CPE is not used for sending an IMS voice and MMS, so a rule based on the connection capability is not applicable to the 5G CPE. |

It can be seen from Table 1 that only part of the URSP rules in the related art may be applicable to the 5G CPE in certain scenarios, because the URSP rules in the related art are designed for an ordinary terminal, and a core of the design is to enable the ordinary terminal to achieve 1: 1 mapping between the application and the network slice, thereby guaranteeing the network quality at an application granularity. For the 5G CPE, however, the application is not directly installed on the 5G CPE, but on the terminal accessing the second-hop network of the 5G CPE, so 5G CPE cannot directly perceive the application, and it is difficult to support the 1: 1 mapping between the application and the network slice.

In a practical application, it may be considered to enable the 5G CPE to achieve N: 1 mapping (N is an integer greater than 1) between multiple applications with a same type and the network slice based on the information about a capability of the second-hop network. For example, it can be seen from the above three industrial application scenarios of the 5G CPE (i.e., service scenario 1, service scenario 2 and service scenario 3) that, industrial users generally deploy different types of applications on different types of the second-hop networks of the 5G CPE. If the service data of the 5G CPE with a same network type may be accessed to a same network slice in this scenario, differentiated network transmission services for different types of services may be achieved.

However, the URSP rules in the related art cannot be configured based on the information about the capability of the second-hop network of the 5G CPE, so the above functions cannot be achieved. Similarly, QoS rules in the related art cannot be configured based on the information about the capability of the second-hop network of the 5G CPE, either.

To sum up, the URSP rules in the related art cannot be configured based on the information about the capability of the second-hop network of the 5G CPE, which makes it difficult to achieve differentiated transmission services for service data of the services accessing the 5G network through the 5G CPE.

Based on this, in various embodiments of the disclosure, in a scenario where the terminal only supports a non-5G network, the terminal needs to access the 5G CPE through the non-5G network, and then to access the 5G network through the 5G CPE: the network side configures the association between the second-hop network (i.e., the non-5G network between the terminal and the 5G CPE) and the network slice for the 5G CPE, that is, provides an enhanced data scheduling rule for the 5G CPE, so that the 5G CPE may fully utilize the 5G network slice technology to relay services to access the 5G network for the terminal that does not support the 5G network, thereby enabling the 5G CPE to differentially ensure a network resource and transmission quality, and improving user experience.

An embodiment of the disclosure provides a method for configuring information, which is applied to a network device and includes the following operation.

First information is sent to a first device. The first information at least indicates an association between a first network and a network slice.

A terminal accesses the first device through the first network, and the network device communicates with the terminal through the first device and the first network. That is, the first network is configured to connect the terminal and the first device.

It should be understood herein that the terminal cannot communicate directly with a network side, and the network side communicates with the terminal through the first device and the first network. In other words, the terminal does not support the 5G network.

In a practical application, the terminal may also be called a UE or a user. The terminal may include a mobile phone, a computer and other office devices, and may further include a wearable device, a camera, a Virtual Reality (VR) device, an Internet of Things (IoT) device, and/or the like, which is not limited by the embodiments of the disclosure.

In a practical application, the first device may include a gateway device capable of converting between 5G signals and non-5G signals. Illustratively, the first device may include the 5G CPE and a 5G terminal with a relay function, for example, the 5G terminal supporting a Device to Device (D2D) communication technology. A specific implementation of the first device is not limited in the embodiments of the disclosure.

In a practical application, the first network may be understood as the non-5G network between the first device and the terminal, and may be referred to as the second-hop network of the first device. The first network may include the 4G, the NB-IoT, the WiFi, the Zigbee, the Bluetooth, the RFID network, the LoRaWAN and other wireless networks, as well as the optical fiber, the network cable, the HDMI and other wired networks.

In a practical application, the network side may include a base station, a core network, a Multi-access Edge Computing (MEC) platform and other network devices. The network device configuring the first information may be set based on the requirements, which is not limited by the embodiments of the disclosure. It can be understood herein that in case that the first information is configured by the core network or the MEC platform, the core network or the MEC platform may send the first information to the base station, which will forward the first information to the first device.

In a practical application, the network device may send the first information to the first device through Radio Resource Control (RRC) signaling, Non-Access Layer (NAS) signaling, IP signaling, Downlink Control Information (DCI), Media Access Control Control Element (MAC CE), and other signaling carriers.

In an embodiment, the first information may at least include second information and third information.

The second information characterizes an attribution of the first network.

The third information characterizes the network slice corresponding to the first network.

The second information may specifically characterize an attribute of at least one access network of the first network. The access network may include the 4G, the NB-IoT, the WiFi, the Zigbee, the Bluetooth, the RFID network, the LoRaWAN and other wireless networks, as well as the optical fiber, the network cable, the HDMI and other wired networks.

In a practical application, the second information may identify data traffic, satisfying at least one network information feature that can be identified by the first device, in the first network, that is, the data traffic corresponding to at least one attribute of the first network, for example, the data traffic on a WiFi network, data of APP1 on a wired network, etc.

In a practical application, the third information may include a network slice ID characterizing an ID of the network slice associated with data conforming to at least one feature of the first network, that is, an ID of the network slice associated with data corresponding to the at least one attribute of the first network. The network slice ID may be implemented by Network Slice Selection Assistance Information (NSSAI), Single NSSAI (S-NSSAI) and/or the like.

In a practical application, after receiving the first information, the first device may update local URSP rules using the first information, and carry data of the first network onto the network slice corresponding to the first network using the updated URSP rules, i.e., using the first information. Specifically, the first device may assemble and combine uplink service data conforming to the second information, and forward the combined uplink service data to a network slice specified by the corresponding third information. That is, the uplink service data is sent to the network side through the specified network slice, and a data transmission process from the first device to the network side is completed.

In an embodiment, the second information includes at least one of: an identifier of an access network type of the first network; an identifier of an access point in the first network; information about a manufacturer of the at least one terminal accessing the first network; information about a device type of the at least one terminal accessing the first network; or information about an application carried by the first network.

The identifier of the access network type of the first network refers to a unique identifier of the type of the access network on the first device, which may support the first device in forwarding the service data carried by different types of access networks to different network slices, for example, the 4G, the NB-IoT, the WiFi, the Zigbee, the Bluetooth, the RFID network, the LoRaWAN and other wireless networks, as well as the optical fiber, the network cable, the HDMI and other wired networks. The identifier of the access network type of the first network may be implemented in various ways, for example, a Bitmap, a numbering, a string and/or the like, which is not limited by the embodiments of the disclosure. Illustratively, when the identifier of the access network type of the first network is implemented by means of the Bitmap, "0001" may represent WiFi, "0010" may represent wireline, and "0011" may represent that both WiFi and the wireline are applicable. When the identifier of the access network type of the first network is implemented by means of the numbering, "0000" may represent WiFi, and "0001" may represent wireline. When the identifier of the access network type of the first network is implemented by means of the string, the string "wifi" may represent WiFi, and the string "wireline" may represent wireline.

The identifier of the access point in the first network refers to a unique identifier of the access point on the first device, and may support the first device in forwarding service data carried by different sub-networks in the first network to different network slices. The access point may be understood as a sub-network in the first network, and the identifier of the access point in the first network may be referred to as a network identifier, that is, the ID of the access network, which may be implemented in various ways, for example, a numbering, a string and/or the like. Illustratively, assuming that there are three sub-networks in the first network, when the identifier of the access point is implemented by means of the numbering and a 2 bit numbering is adopted, the three sub-networks may be identified by using the numbers "00", "01" and "11" respectively. When the identifier of the access point is implemented by means of the string and using a name of the sub-network, the string "Guest" may identify a guest sub-network, the string "Staff" may identify a staff sub-network, and the string "VIP" may identify a VIP sub-network.

In a practical application, the at least one terminal accessing the first network may be understood as at least one terminal accessing the first device through the at least one access network. The manufacturer of the terminal may also be referred to as a vendor. When deploying a service, the user usually purchases one or more terminal devices from specific manufacturers. The information about the manufacturer of the at least one terminal accessing the first network may support the first device in forwarding the uplink data from terminals of different manufacturers accessing the first network to different network slices. The information about the manufacturer may include a manufacturer identifier, which may be implemented in various ways, for example, a numbering, a string and/or the like. Illustratively, when the manufacturer identifier is implemented by means of the numbering, the numberings "00", "01" and "11" may be respectively used to represent three manufacturers. When the manufacturer identifier is implemented by means of the string, the manufacturer identifier may be represented using a full name or an abbreviation of a corresponding manufacturer, for example, the string "HW", "ZTE" and "CMCC".

In a practical application, the device type of the terminal may include an office device, a wearable device, a camera, a VR device and/or the like. Information about the device type of the at least one terminal accessing the first network may support the first device in forwarding the uplink data from different types of terminals accessing the first network to different network slices. The information about the device type of the terminal may include a device type identifier, which may be implemented in various ways, for example, a numbering, a string and/or the like. Illustratively, when the device type identifier is implemented by means of the numbering, the numberings "00", "01" and "11" may be respectively used to represent three device types. When the device type identifier is implemented by means of the string, the device type identifier may be represented using a full name or an abbreviation of the device type, for example, "VR", "Camera" and "IoT".

In a practical application, the information about the application carried by the first network may support the first device in forwarding data from different applications accessing the first network to different network slices. The information about the application may include an application identifier which may be implemented in various ways, for example, an ID numbering, a string and/or the like. Illustratively, when an application identifier is implemented by means of the ID numbering, the numbering "OSId+APPId" (i.e., an operating system ID + an application ID) may be used to identify the application. When the application identifier is implemented by mean of the string, the string "AppName + Provider" (i.e., an application name + an application provider) may be used to identify the application.

In a practical application, the information about the application carried by the first network may be reported to the network device by the terminal through the first device; or, may be obtained by the network device in a pre-configured way.

In a practical application, the first device may report the information about the first network to the network device, and the network device may configure the first information based on the information about the first network. That is, the network device may determine the association between the first network and the network slice, and send the first information to the first device.

Based on this, in an embodiment, the method may further include the following operations.

Fourth information reported by the first device is received. The fourth information characterizes information about the first network.

The first information is sent to the first device based on the fourth information.

In a practical application, the first device may report the fourth information to the network device through the RRC signaling, the NAS signaling, the IP signaling, the MAC CE, Uplink Control Information (UCI), and other signaling carriers. It should be understood that in case that the first information is configured by the core network or the MEC platform, the base station may forward the fourth information to the core network or the MEC platform after receiving the fourth information.

In a practical application, the first device may report the fourth information to the network device in a manner of a single reporting, a non-periodic reporting or a periodic reporting. The reporting process may be triggered by the first device actively or by the network device. The specific manner of reporting the fourth information by the first device may be set based on the requirements, which is not limited by the embodiments of the disclosure.

In a practical application, the fourth information may include attribute information of the first network. In other words, the fourth information may include the second information, that is, may include at least one of: an identifier of an access network type of the first network; an identifier of an access point in the first network; information about a manufacturer of the at least one terminal accessing the first network; information about a device type of the at least one terminal accessing the first network; or information about an application carried by the first network.

In a practical application, the fourth information may further include fifth information. The fifth information characterizes a transmission capability of the first network. The fifth information may specifically include at least one of: information about a transmission priority of a service carried by the first network; or information about a transmission performance requirement of the service carried by the first network.

Here, the information about the transmission priority of the service carried by the first network refers to a network transmission priority requirement of a service carried by each access network of the first network. The information about the transmission performance requirement of the service carried by the first network refers to a network performance requirement of a service carried by each access network of the first network.

In a practical application, the information about the transmission priority of the service carried by the first network may be implemented in a numbering, a string and other ways. The information about the transmission performance requirement may include at least one of: an uplink rate, a downlink rate, a delay, a jitter, or reliability.

The uplink rate refers to a requirement for a network uplink rate. The downlink rate refers to a requirement for a network downlink rate. The delay refers to a requirement for a network delay. The jitter refers to a requirement for a network jitter. The reliability refers to a requirement for network reliability. The uplink rate, the downlink rate, the delay, the jitter and the reliability may be implemented in a variety of ways, for example, a level numbering, a numerical form, a string form, etc.

In a practical application, after receiving the fourth information reported by the first device, the network device may determine the association between the first network and the network slice based on the second information and/or the fifth information.

Illustratively, it is assumed that the network side configures two types of network slices: a generic slice and a dedicated slice. Compared to the generic slice, the dedicated slice has a higher degree of isolation of the network resource and may support a higher network QoS and network security level.

In case that the second information includes the identifier of the access network type of the first network and the fifth information includes the information about the transmission priority of the service carried by the first network, and when the fourth information specifically includes: (WiFi, medium) and (wireline, high), the network device may configure the associations between the data of different types of access networks in the first device and different network slices, that is, the first information may specifically include: (WiFi, a generic slice) and (wireline, a dedicated slice).

In case that the second information includes the identifier of the access point in the first network and the fifth information includes the information about the transmission performance requirement of the service carried by the first network, and when the fourth information specifically includes: (Staff, "delay <_ 50 milliseconds (ms)") and (Guest, "delay <_ 500 ms"), the network device may configure the associations between the network slices meeting the corresponding transmission performance requirement and the data of different access points in the first device, that is, the first information may specifically include: (Staff, a dedicated slice) and (Guest, a generic slice).

In case that the second information includes the information about the manufacturer of the at least one terminal accessing the first network, and when the fourth information specifically includes: (CMCC) and (H3C), the network device may configure the associations between different network slices and the data from the terminals of different manufacturers in the first device, that is, the first information may specifically include: (CMCC, a dedicated slice) and (H3C, a generic slice).

In case that the second information includes the information about the device type of the at least one terminal accessing the first network, and when the fourth information specifically includes: (a surgical robot), (a mobile phone) and (a camera), the network device may configure the associations between different network slices and the data from the terminals with different device types in the first device, that is, the first information may specifically include: (a surgical robot, a dedicated slice), (a mobile phone, a generic slice) and (a camera, a generic slice).

In case that the second information includes the information about the application carried by the first network, and when the fourth information specifically includes: (a robotic surgery), (an emergency treatment), or when the network device determines that the application deployed in the current system includes (a robotic surgery) and (an emergency treatment) by obtaining the pre-configured information, the network device may configure the associations between network slices and the data of different applications in the first device, that is, the first information may specifically include: (a robotic surgery, a dedicated slice) and (an emergency treatment, a dedicated slice).

In an embodiment, when the first information indicates at least two associations between attributes of the first network and network slices, the first information may further indicate usage priorities of the at least two associations.

Herein, after receiving the first information, the first device may select a network slice for carrying data of the first network based on the usage priorities of the at least two associations in a process of carrying the data of the first network onto the corresponding network slice.

In a practical application, the same data traffic received by the first device may match at least two features of the first network, that is, at least two attributes of the first network. The association between each of the at least two attributes of the first network and a respective network slice may be different from the others. Illustratively, the data traffic of the camera accessing the WiFi network may match two attributes of the first network, i.e., the access network type is the WiFi, and the device type is the camera. When the traffic of the access network type of WiFi is associated with the network slice A, and the traffic of the device type of the camera is associated with the network slice B, the network device needs to set priorities for the two associations (i.e., "the access network type of WiFi - the network slice A" and "the device type of the camera - the network slice B "), so that the first device may determine whether the data traffic of the camera accessing the WiFi network is sent to the network slice A or the network slice B.

In an embodiment, the first information explicitly or implicitly indicates the usage priorities of the at least two associations.

Herein, the operation that the usage priorities of the at least two associations are indicated explicitly means that the first information may include a field indicating the usage priorities of the at least two associations, for example, "Priority = 1", "Priority = 2", etc. In other words, the first information may include sixth information characterizing the usage priorities of the at least two associations.

The operation that the usage priorities of the at least two associations are indicated implicitly means that usage priorities of the at least two associations are indicated in a hidden indication manner, for example, the order in which the at least two associations are sent (i.e., an arrangement order). For example, in case that the first information includes the fields of "the access network type of WiFi - the network slice A" and "the device type of the camera - the network slice B", the usage priority of the network slice A is higher than the usage priority of the network slice B for the data traffic of the camera accessing the WiFi network.

In an embodiment, when the first network is associated with at least two network slices, the first information further indicates priorities of the at least two network slices.

Herein, after receiving the first information, the first device may select a network slice for carrying data of the first network based on the priorities of the at least two network slices in the process of carrying the data of the first network onto the corresponding network slice. In other words, the first device may sequentially send data based on the priorities of the at least two network slices, that is, when a network slice with a higher priority is unavailable, a network slice corresponding to a next priority is selected to send data.

In a practical application, the network device may configure at least two network slices associated with the same attribute of the first network of the first device. Illustratively, in an IoT scenario, the network device may configure an IoT terminal to preferentially access a massive Machine Type of Communication (mMTC) network slice. When the mMTC network slice is unavailable (e.g., the communication connection cannot be established or the data transmission fails), the first device may select an Enhanced Mobile Broadband (eMBB) network slice to access, so that the service of the IoT terminal is not interrupted.

In an embodiment, the first information explicitly or implicitly indicates the priorities of the at least two network slices.

Herein, the way of explicitly or implicitly indicating the priorities of the at least two network slices is the same as that of explicitly or implicitly indicating the usage priorities of the at least two associations, which will not be repeated herein.

Correspondingly, an embodiment of the disclosure provides a method for configuring information, which is applied to a first device and includes the following operation.

First information is received from a network side. The first information at least indicates an association between a first network and a network slice.

A terminal accesses the first device through the first network, and the network side communicates with the terminal through the first device and the first network. That is, the first network is configured to connect the terminal and the first device.

In an embodiment, the method may further include the following operation.

Data of the first network is carried onto the network slice corresponding to the first network using the first information.

Illustratively, in case that the second information includes an identifier of an access network type of the first network, when the first device receives data packets from interfaces corresponding to different access network types, the data packets from the interfaces corresponding to the different access network types may be forwarded to corresponding 5G network slices based on associations between the access network types and the network slices.

In case that the second information includes an identifier of an access point in the first network, when the first device receives data packets from interfaces corresponding to different access points, the data packets from the interfaces corresponding to the different points may be forwarded to corresponding 5G network slices based on associations between the access points and the network slices.

In case that the second information includes information about a manufacturer of at least one terminal accessing the first network, the first device may forward, based on associations between the manufacturers and the network slices, data packets corresponding to different manufacturers to corresponding 5G network slices by parsing the information about the manufacturers in the data packets.

In case that the second information includes information about a device type of at least one terminal accessing the first network, the first device may forward, based on associations between the device types and the network slices, data packets corresponding to different device types to corresponding 5G network slices by parsing the information about the device types in the data packets.

In case that the second information includes information about an application carried by the first network, the first device may forward, based on associations between the applications and the network slices, data packets corresponding to different applications to corresponding 5G network slices by parsing the information about the applications in the data packets.

In an embodiment, the method may further include the following operation.

Fourth information is reported to the network side. The fourth information characterizes information about at least one first network.

In an embodiment, when the first information indicates at least two associations between attributions of the first network and network slices, the first information further indicates usage priorities of the at least two associations.

Accordingly, the method may further include the following operation.

A network slice is selected for carrying data of the first network based on the usage priorities of the at least two associations.

In an embodiment, when the first network is associated with at least two network slices, the first information further indicates priorities of the at least two network slices.

Accordingly, the method may further include the following operation.

A network slice is selected for carrying data of the first network based on the priorities of the at least two network slices.

An embodiment of the disclosure provides a method for configuring information, as illustrated in FIG. 3. The method includes the following operations.

At operation 301, a network device sends first information to a first device.

Herein, the first information indicates at least an association between a first network and a network slice.

At operation 302, the first device receives the first information from the network device.

A terminal accesses the first device through the first network, and the network device communicates with the terminal through the first device and the first network. That is, the first network is configured to connect the terminal and the first device.

In the method for configuring information provided by the embodiments of the disclosure, the network device sends the first information to the first device, the first information at least indicates an association between the first network and the network slice, and the first network is configured to connect at least one terminal and the first device. With the solution in the embodiments of the disclosure, in a scenario where the terminal only supports a non-5G network (i.e. the first network), the terminal needs to access the first device through the non-5G network, and then to access to the 5G network through the first device: the network side configures the association between the non-5G network and the network slice for the first device, that is, provides an enhanced data scheduling rule for the first device, so that the first device may fully utilize the 5G network slice technology to relay services to access the 5G network for the terminal that does not support the 5G network, thereby enabling the first device to differentially ensure a network resource and transmission quality, and improving user experience.

The disclosure will be further described in detail below in combination with the application embodiments.

In an application embodiment, a data scheduling rule and configuration method for the 5G CPE (i.e., the 5G terminal) are proposed to address the problem that the access gateway device (i.e. the first device mentioned above, for example, the 5G CPE, the 5G terminal with the relay function, etc.) cannot support the differentiated service for the service data carried by the second-hop network (i.e. the first network). As illustrated in FIG. 4, in order to support the access of the service data from the second-hop network of 5G CPE (i.e., the 5G terminal) to different network slices, the URSP rules on the 5G CPE (i.e., the 5G terminal) need to include the associations between the second-hop network information and the network slices, and the network side (e.g., the base station, the core network, the MEC platform, and other network devices) configures the associations between the second-hop network information and the network slices for the 5G CPE (i.e., 5G terminal). For example, for the above three industrial application scenarios (i.e., service scenario 1, service scenario 2 and service scenario 3), the network side may configure the associations between the information about the network types of the second-hop networks of the 5G CPE and the network slices, and send the associations to the 5G CPE. The 5G CPE updates the local URSP rules using the received associations, so that the data belonging to a specified type of the second-hop network may be forwarded to a specified network slice, thereby guaranteeing differentiated network transmission services for different types of services accessed by different types of second-hop networks of the 5G CPE.

In the application embodiment, in order to simplify the description, the 5G CPE (i.e., the 5G terminal) is uniformly denoted as the 5G CPE, which can be understood as a 5G terminal.

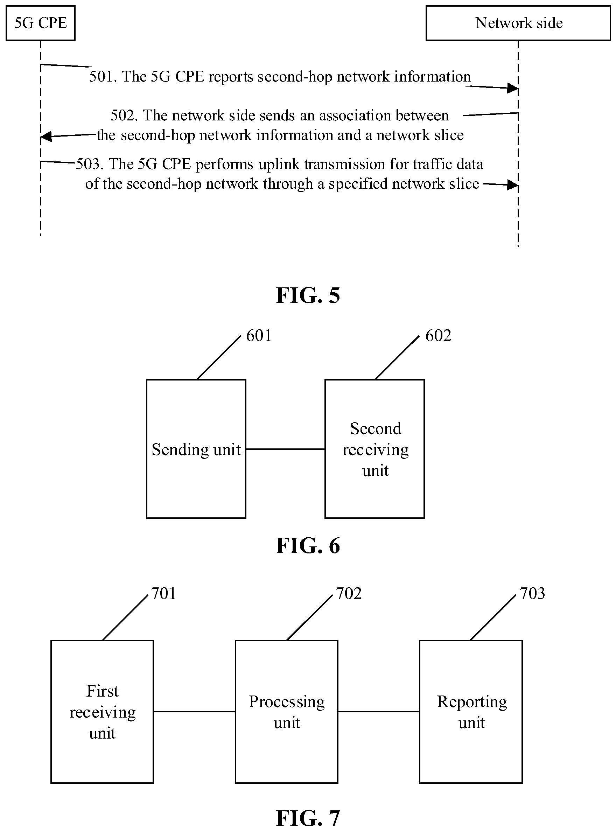

Specifically, as illustrated in FIG. 5, in an application embodiment, a communication process between a 5G CPE and a network side may include the following operations.

At operation 501, the 5G CPE reports second-hop network information (i.e., the fourth information mentioned above).

At operation 502, the network side sends an association between the second-hop network information and a network slice (i.e. the first information mentioned above).

At operation 503, the 5G CPE transmits traffic data of the second-hop network in an uplink through a specified network slice.

At the operation 501, the 5G CPE may report the type of the second-hop network, the network ID and other information to the network side. The reporting may be in a single, periodic or non-periodic manner to meet a dynamic change requirement of the second-hop network of the 5G CPE.

At the operation 502, the network side may determine the association between the second-hop network information and the network slice based on the second-hop network information fed back by the 5G CPE, and transmit the determined association to the 5G CPE through the RRC, the NAS, the IP, the DCI, the MAC CE, and other signaling carriers. After receiving the association between the second-hop network information and the network slice from the network side, the 5G CPE may update the local URSP rules based on the received association.

At the operation 503, the 5G CPE may assemble and combine the uplink service data on the second-hop network of the 5G CPE based on the updated local URSP rules, and send the combined uplink service data through the specified network slice to complete the data transmission process from the 5G CPE to the network side. Specifically, the association between the second-hop network information and the network slice at least includes an identifier of the second-hop network information (i.e. the second information mentioned above) and a network slice ID (i.e. the third information mentioned above). After receiving the association between the second-hop network information and the network slice, the 5G CPE may assemble and combine the data traffic conforming to the identifier of the second-hop network information, and forward the combined uplink service data to the network slice specified by the network slice ID.

In the application embodiment, the association between the second-hop network information and the network slice may further include priority information. In case that the same second-hop network information in the 5G CPE is associated with multiple network slices, or the same data traffic matches the multiple associations between the second-hop network information and the network slices, the priority information is used to select the network slice when the 5G CPE forwards the data traffic conforming to the specified "identifier of the second-hop network information". That is, when the network slice with a higher priority is unavailable, the 5G CPE selects a network slice corresponding to a next priority to forward data. The priority information may be indicated implicitly (for example, the priorities of the network slices are indicated by default sorting) or explicitly as illustrated in Table 2.

**Table 2**

| An example of the association between the second-hop network information and the network slice | | | Description |
|---|---|---|---|
| Priority = 1 | An identifier of the second-hop network information: | A network slice ID = S-NSSAI-a | The association indicates the 5G CPE to associate the traffic of the second-hop network type of "WiFi" with the network slice S-NSSAI-a, and an association priority is 1. |
| | the identifier of the network type = "WiFi" | | |
| Priority = 2 | An identifier of the second-hop network information: | A network slice ID = S-NSSAI-b | The association indicates the 5G CPE to associate the traffic of the device type of "camera" in the sub-network (in the second-hop network) identified as "CMII" with the network slice S-NSSAI-b, and an association priority is 2. |
| | the network identifier = "CMII" | | |
| | a device type = "Camera" | | |

In the solution provided by the application embodiment, the network side configures the association between the second-hop network information and the network slice for the 5G CPE based on the second-hop network information reported by the 5G CPE, that is, provides an enhanced data scheduling rule for the 5G CPE configured with the second-hop network, so that the 5G CPE may fully utilize the 5G network slice technology to relay services to access the 5G network for the terminal that does not support the 5G network, thereby enabling the 5G CPE to differentially ensure a network resource and transmission quality, and improving user experience.

In order to implement the method at the network device side in the embodiment of the disclosure, an embodiment of the disclosure further provides an apparatus for configuring information, which is arranged on the network device. As illustrated in FIG. 6, the apparatus includes a sending unit 601 and a second receiving unit 602.

The sending unit 601 is configured to send first information to a first device. The first information at least indicates an association between a first network and a network slice.

A terminal accesses the first device through the first network, and the network device communicates with the terminal through the first device and the first network. That is, the first network is configured to connect the terminal and the first device.

In an embodiment, the second receiving unit 602 is configured to receive fourth information reported by the first device, and the fourth information characterizes information about the first network.

Correspondingly, the sending unit 601 is further configured to send the first information to the first device based on the fourth information.

In a practical application, the sending unit 601 may be implemented by a processor in combination with a communication interface in the apparatus for configuring information. The second receiving unit 602 may be implemented by the communication interface in the apparatus for configuring information.

In order to implement the method at the first device side in the embodiment of the disclosure, an embodiment of the disclosure further provides an apparatus for configuring information, which is arranged on the first device. As illustrated in FIG. 7, the apparatus includes a first receiving unit 701, a processing unit 702 and a reporting unit 703.

The first receiving unit 701 is configured to receive first information from a network side. The first information at least indicates an association between a first network and a network slice.

A terminal accesses the first device through the first network, and the network side communicates with the terminal through the first device and the first network. That is, the first network is configured to connect the terminal and the first device.

In an embodiment, the processing unit 702 is configured to carry data of the first network onto the network slice corresponding to the first network using the first information.

In an embodiment, the reporting unit 703 is configured to report fourth information to the network side. The fourth information characterizes information about at least one first network.

In an embodiment, when first information indicates at least two associations between attributions of the first network and network slices, the first information further indicates usage priorities of the at least two associations.

Correspondingly, the processing unit 702 is further configured to select a network slice for carrying data of the first network based on the usage priorities of the at least two associations.

In an embodiment, when the first network is associated with at least two network slices, the first information further indicates priorities of the at least two network slices.

Correspondingly, the processing unit 702 is further configured to select a network slice for carrying data of the first network based on the priorities of the at least two network slices.

In a practical application, the first receiving unit 701 and the reporting unit 703 may be implemented by a communication interface in the apparatus for configuring information. The processing unit 702 may be implemented by a processor in the apparatus for configuring information.

It should be noted that the apparatus for configuring information provided in the above embodiments only provide examples of the division of program modules during information configuration. In a practical application, the above processing may be assigned and completed by different program modules as needed. That is, the internal structure of the apparatus is divided into different program modules to complete all or part of the processing described above. In addition, the apparatuses and the methods for configuring information provided by the above embodiments belong to the same concept, and the specific implementation process of the apparatuses is detailed in the method embodiments, which will not be repeated here.

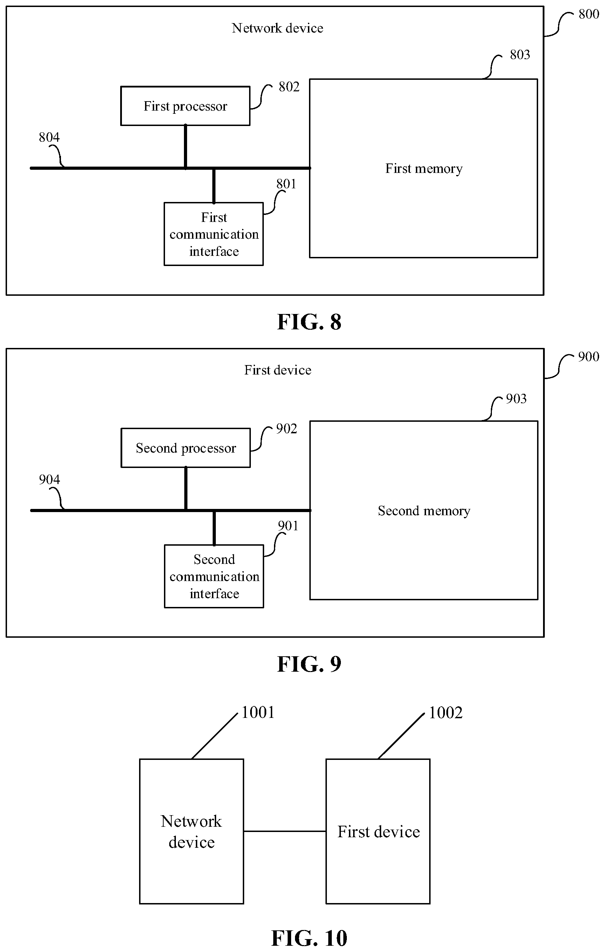

Based on a hardware implementation of the above program modules, and in order to implement the method at the network device side in the embodiment of the disclosure, an embodiment of the disclosure further provides a network device. As illustrated in FIG. 8, the network device 800 includes a first communication interface 801, a first processor 802, a first memory 803 and a bus system 804.

The first communication interface 801 is capable of interacting information with a first device.

The first processor 802 is connected with the first communication interface 801 to realize information interaction with the first device, and is configured to perform the methods provided by one or more technical solutions at the network device side described above when running a computer program. The computer program is stored on the first memory 803.

Specifically, the first communication interface 801 is configured to send first information to the first device, and the first information at least indicates an association between a first network and a network slice.

A terminal accesses the first device through the first network. The network device 800 communicates with the terminal through the first device and the first network. That is, the first network is configured to connect the terminal and the first device.

In an embodiment, the first communication interface 801 is further configured to receive fourth information reported by the first device. The fourth information characterizes information about the first network.

Correspondingly, the first processor 802 is configured to send the first information to the first device through the first communication interface 801 based on the fourth information.

It should be noted that the specific processing processes of the first communication interface 801 and the first processor 802 may be understood with reference to the above methods.

In a practical application, the various components in the network device 800 are coupled together through the bus system 804. It should be understood that the bus system 804 is configured to implement connection communication between these components. The bus system 804 includes a power bus, a control bus and a status signal bus in addition to a data bus. However, the various buses are labeled as the bus system 804 in FIG. 8 for clarity.

The first memory 803 in the embodiments of the disclosure is configured to store various types of data to support the operation of the network device 800. Examples of these data include any computer program for operating on the network device 800.

The methods disclosed in the above embodiments of the disclosure may be applied to the first processor 802, or implemented by the first processor 802. The first processor 802 may be an integrated circuit chip with a signal processing capability. The steps of the above methods may be accomplished by an integrated logic circuit in the form of hardware in the first processor 802 or instructions in the form of software during the implementation. The first processor 802 described above may be a general processor, a Digital Signal Processor (DSP), or other programmable logic devices, a discrete gate or transistor logic device, a discrete hardware component, or the like. The first processor 802 may implement or perform the various methods, steps and logic blocks disclosed in the embodiments of the disclosure. The general processor may be a microprocessor or any conventional processor or the like. The steps of the methods disclosed in the embodiments of the disclosure may be directly executed and completed by a decoding processor in the form of hardware or by a combination of the hardware in the decoding processor and software modules. The software modules may be located in a storage medium in the first memory 803, and the first processor 802 reads information in the first memory 803 and completes the steps of the above methods in combination with hardware thereof.

In an exemplary embodiment, the network device 800 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general processors, controllers, Micro Controller Units (MCUs), microprocessors, or other electronic elements, to perform the above methods.

Based on a hardware implementation of the above program modules, and in order to implement the methods at the first device side in the embodiment of the disclosure, an embodiment of the disclosure further provides a first device. As illustrated in FIG. 9, the first device 900 includes a second communication interface 901, a second processor 902, a second memory 903 and a bus system 904.

The second communication interface 901 is capable of interacting information with a network side.

The second processor 902 is connected with the second communication interface 901 to realize information interaction with the network side, and is configured to perform the methods provided by one or more technical solutions at the first device side described above when running a computer program. The computer program is stored on the second memory 903.

Specifically, the second communication interface 901 is configured to receive first information from the network side, and the first information at least indicates an association between a first network and a network slice.

A terminal accesses the first device through the first network. The network side communicates with the terminal through the first device and the first network. That is, the first network is configured to connect the terminal and the first device 900.

In an embodiment, the second processor 902 is configured to carry data of the first network onto the network slice corresponding to the first network using the first information.

In an embodiment, the second communication interface 901 is further configured to report fourth information to the network side. The fourth information characterizes information about at least one first network.

In an embodiment, when first information indicates at least two associations between attributions of the first network and network slices, the first information further indicates usage priorities of the at least two associations.

Correspondingly, the second processor 902 is further configured to select a network slice for carrying data of the first network based on the usage priorities of the at least two associations.

In an embodiment, when the first network is associated with at least two network slices, the first information further indicates priorities of the at least two network slices.

Correspondingly, the second processor 902 is further configured to select a network slice for carrying data of the first network based on the priorities of the at least two network slices.

It should be noted that the specific processing processes of the second communication interface 901 and the second processor 902 may be understood with reference to the above methods.

In a practical application, the various components in the first device 900 are coupled together through the bus system 904. It should be understood that the bus system 904 is configured to implement connection communication between these components. The bus system 904 includes a power bus, a control bus and a status signal bus in addition to a data bus. However, the various buses are labeled as the bus system 904 in FIG. 9 for clarity.

The second memory 903 in the embodiments of the disclosure is configured to store various types of data to support the operation of the first device 900. Examples of these data include any computer program for operating on the first device 900.

The methods disclosed in the above embodiments of the disclosure may be applied to the second processor 902, or implemented by the second processor 902. The second processor 902 may be an integrated circuit chip with a signal processing capability. The steps of the above methods may be accomplished by an integrated logic circuit in the form of hardware in the second processor 902 or instructions in the form of software during the implementation. The second processor 902 described above may be a general processor, a DSP, or other programmable logic devices, a discrete gate or transistor logic device, a discrete hardware component, or the like. The second processor 902 may implement or perform the various methods, steps and logic blocks disclosed in the embodiments of the disclosure. The general processor may be a microprocessor or any conventional processor or the like. The steps of the methods disclosed in the embodiments of the disclosure may be directly executed and completed by a decoding processor in the form of hardware or by a combination of the hardware in the decoding processor and software modules. The software modules may be located in a storage medium in the second memory 903, and the second processor 902 reads information in the second memory 903 and completes the steps of the above methods in combination with hardware thereof.

In an exemplary embodiment, the first device 900 may be implemented by one or more ASICs, DSPs, PLDs, CPLDs, FPGAs, general processors, controllers, MCUs, microprocessors, or other electronic elements, to perform the above methods.

It should be understood that the memory (the first memory 803 or the second memory 903) in embodiments of the disclosure may be a volatile memory, a non-volatile memory, or include both the volatile memory and the non-volatile memory. The non-volatile memory may be a Read-Only Memory (ROM), a Programmable ROM (PROM), an Erasable PROM (EPROM), an Electrically EPROM (EEPROM), a Ferromagnetic Random Access Memory (FRAM), a flash memory, a magnetic surface memory, an optical disc, or a Compact Disc ROM (CD-ROM). The magnetic surface memory may be a magnetic disk memory or a magnetic tape memory. The volatile memory may be a Random Access Memory (RAM), which serves as an external cache. By way of illustration but not limitation, many forms of RAMs are available, such as a Static RAM (SRAM), a Synchronous SRAM (SSRAM), a Dynamic RAM (DRAM), a Synchronous DRAM (SDRAM), a Double Data Rate SDRAM (DDRSDRAM), an Enhanced SDRAM (ESDRAM), a SyncLink DRAM (SLDRAM), a Direct Rambus RAM (DRRAM). The memories described in the embodiments of the disclosure are intended to, but are not limited to, include these and any other suitable types of memories.

In order to implement the methods provided by the embodiments of the disclosure, an embodiment of the disclosure further provides a system for configuring information. As illustrated in FIG. 10, the system includes a network device 1001 and a first device 1002.

Here, it should be noted that the specific processing processes of the network device 1001 and the first device 1002 have been described in detail above, and will not be repeated here.

In an exemplary embodiment, an embodiment of the disclosure further provides a storage medium, i.e., a computer storage medium, specifically a computer-readable storage medium, including, for example, the first memory 803 for storing a computer program. The computer program may be executed by the first processor 802 in the network device 800 to complete the steps of methods at the network device side described above. For another example, the computer-readable storage medium may include the second memory 903 for storing a computer program, which may be executed by the second processor 902 in the first device 900 to complete the steps of the methods at the first device side described above. The computer-readable storage medium may be a memory, such as a FRAM, a ROM, a PROM, an EPROM, an EEPROM, a flash memory, a magnetic surface memory, an optical disk, or a CD-ROM, etc.

It should be noted that the "first", "second" and the like are used to distinguish similar objects, rather than describing a specific order or sequence.

In addition, the technical solutions described in the embodiments of the disclosure may be arbitrarily combined without conflicting with each other.

The above descriptions are only preferred embodiments of the disclosure and are not intended to limit the scope of protection of the disclosure.

## Claims

1. A method for configuring information, applied to a network device, the method comprising:
sending first information to a first device, the first information at least indicating an association between a first network and a network slice, wherein
the first network is configured to connect at least one terminal and the first device.

2. The method of claim 1, wherein the first information at least comprises:
second information characterizing an attribution of the first network; and
third information characterizing the network slice corresponding to the first network.

3. The method of claim 2, wherein the second information comprises at least one of:
an identifier of an access network type of the first network;
an identifier of an access point in the first network;
information about a manufacturer of the at least one terminal accessing the first network;
information about a device type of the at least one terminal accessing the first network; or
information about an application carried by the first network.

4. The method of claim 1, further comprising:
receiving fourth information reported by the first device, the fourth information characterizing information about the first network; and
sending the first information to the first device based on the fourth information.

5. The method of claim 3, wherein when the first information indicates at least two associations between attributions of the first network and network slices, the first information further indicates usage priorities of the at least two associations.

6. The method of claim 5, wherein the first information explicitly or implicitly indicates the usage priorities of the at least two associations.

7. The method of any one of claims 1 to 4, wherein when the first network is associated with at least two network slices, the first information further indicates priorities of the at least two network slices.

8. The method of claim 7, wherein the first information explicitly or implicitly indicates the priorities of the at least two network slices.

9. A method for configuring information, applied to a first device, the method comprising:
receiving first information from a network side, the first information at least indicating an association between a first network and a network slice, wherein
the first network is configured to connect at least one terminal and the first device.

10. The method of claim 9, further comprising:
carrying data of the first network onto the network slice corresponding to the first network using the first information.

11. The method of claim 9, wherein the first information at least comprises:
second information characterizing an attribution of the first network; and
third information characterizing the network slice corresponding to the first network.

12. The method of claim 11, wherein the second information comprises at least one of:
an identifier of an access network type of the first network;
an identifier of an access point in the first network;
information about a manufacturer of the at least one terminal accessing the first network;
information about a device type of the at least one terminal accessing the first network; or
information about an application carried by the first network.

13. The method of claim 9, further comprising:
reporting fourth information to the network side, the fourth information characterizing information about at least one first network.

14. The method of claim 12, wherein when first information indicates at least two associations between attributions of the first network and network slices, the first information further indicates usage priorities of the at least two associations; and
wherein the method further comprises:
selecting a network slice for carrying data of the first network based on the usage priorities of the at least two associations.

15. The method of claim 14, wherein the first information explicitly or implicitly indicates the usage priorities of the at least two associations.

16. The method of any one of claims 9 to 13, wherein when the first network is associated with at least two network slices, the first information further indicates priorities of the at least two network slices; and
wherein the method further comprises:
selecting a network slice for carrying data of the first network based on the priorities of the at least two network slices.

17. The method of claim 16, wherein the first information explicitly or implicitly indicates the priorities of the at least two network slices.

18. An apparatus for configuring information, comprising:
a sending unit, configured to send first information to a first device, the first information at least indicating an association between a first network and a network slice, wherein
the first network is configured to connect at least one terminal and the first device.

19. An apparatus for configuring information, comprising:
a first receiving unit, configured to receive first information from a network side, the first information at least indicating an association between a first network and a network slice, wherein
the first network is configured to connect at least one terminal and a first device.

20. A network device, comprising: a first communication interface and a first processor, wherein
the first communication interface is configured to send first information to a first device, and the first information at least indicates an association between a first network and a network slice, wherein
the first network is configured to connect at least one terminal and the first device.

21. A first device, comprising: a second communication interface and a second processor, wherein
the second communication interface is configured to receive first information from a network side, and the first information at least indicates an association between a first network and a network slice, wherein
the first network is configured to connect at least one terminal and the first device.

22. A network device, comprising: a first processor and a first memory configured to store a computer program capable of running on a processor, wherein
the first processor is configured to perform operations of the method of any one of claims 1 to 8 when running the computer program.

23. A first device, comprising: a second processor and a second memory configured to store a computer program capable of running on a processor, wherein
the second processor is configured to perform operations of the method of any one of claims 9 to 17 when running the computer program.

24. A storage medium having stored thereon a computer program that, when executed by a processor, causes the processor to perform operations of the method of any one of claims 1 to 8, or to perform operations of the method of any one of claims 9 to 17.
